# EUROPÄISCHE PATENTANMELDUNG

(11) **EP 1 616 483 A1**
(43) Veröffentlichungstag der Anmeldung: **18.01.2006**
(21) Anmeldenummer: 05090211.3
(22) Anmeldetag: 14.07.2005
(51) Int. Cl.: A01K 1/12, A01J 5/017, A01J 7/02, A01J 5/007

(54) **Melkanlage**

(30) Priorität: 15.07.2004 DE 102004035483; 03.12.2004 DE 102004059089
(71) Anmelder: Agrar GbR Schmidt & Frenzel, 14547 Wittbrietzen (DE)
(72) Erfinder: Schmidt, Jörg, 14547 Beelitz O.T. Wittbrietzen (DE); Kasten, Helmut, 14547 Beelitz O.T. Wittbrietzen (DE)
(74) Vertreter: Ninnemann, Detlef

(57) **Zusammenfassung**

Die Erfindung betrifft eine Melkanlage (1) zum Melken eines Nutztieres (10), mit einem Melkzeug (2) zum Ansetzen an und Melken mindestens einer Zitze des Nutztieres auf einem Melkstandboden (5) der Melkanlage. Erfindungsgemäß ist vorgesehen, dass das Melkzeug (2) zumindest teilweise im Melkstandboden (5) versenkbar ist und durch zumindest teilweises Herausführen aus dem Melkstandboden (5) von unten an mindestens eine Zitze (11) des zu melkendes Nutztieres (10) ansetzbar ist. Dadurch wird eine Melkanlage bereitgestellt, die ein einfaches Heranführen des Melkzeuges zu den Zitzen des Nutztieres ermöglicht.

## Beschreibung

Die Erfindung betrifft eine Melkanlage nach dem Oberbegriff des Anspruchs 1.

Nutztiere wie beispielsweise Milchkühe werden in sog. Melkanlagen gemolken. Dabei wird ein Nutztier in die Melkanlage auf den Melkboden getrieben, wo ein seitlich vom Nutztier angeordnetes Melkzeug an das Euter des Nutztieres herangeführt und an die einzelnen Zitzen des Euters angesetzt wird. Üblicherweise wird das Melkzeug dabei durch Seilzüge bewegt und geführt und ist mit Milchschläuchen verbunden, durch die vom Nutztier abgemolkene Milch zur Weiterverarbeitung abgeleitet und gesammelt wird.

Bei den bekannten Melkanlagen hat sich das Heranführen und Ansetzen des Melkzeuges an das Euter des Nutztieres als umständlich erwiesen. Zum Führen des Melkzeuges werden üblicherweise Seilzüge verwendet. Dabei erweist es sich als schwierig, die Melkschläuche zum Ableiten der Milch sowie die Seilzüge soweit geordnet zu halten, dass das Nutztier nicht darüber stolpert.

Aufgabe der vorliegenden Erfindung ist es, eine Melkanlage bereitzustellen, die ein einfaches Heranführen des Melkzeuges an das Euter und Ansetzen an die Zitzen eines Nutztieres ermöglicht.

Diese Aufgabe wird erfindungsgemäß von einer Melkanlage nach Anspruch 1 gelöst.

Danach ist das Melkzeug der Melkanlage so ausgebildet, dass es zumindest teilweise im Melkstandboden der Melkanlage versenkbar und zumindest zum Teil aus dem Melkstandboden heraus an die Unterseite des Euter des zu melkenden Nutztieres ansetzbar ist. Das Melkzeug, das entweder an alle Zitzen des Euters zugleich angesetzt werden kann oder aus einem Milchsammelstück mit mehreren Melkbechern zum Ansetzen an die einzelnen Zitzen besteht, wird zumindest zum Teil aus dem Melkstandboden an das bevorzugt vertikal über dem Melkzeug platzierte Nutztier herangeführt und an die Zitzen des Euters angesetzt.

Durch die erfindungsgemäße Lösung wird der Bereitstellungsweg des Melkzeugs zwischen einer Stauposition im Melkstandboden und einer Arbeitsposition am Euter des Nutztieres minimiert. Es können verkürzte Melkschläuche verwendet werden, die beim Heranführen an das Euter nicht umständlich von der Seite oder von hinten durch die Beine des Nutztieres geführt werden müssen, sondern nur noch entlang der direkten Verbindung zwischen Melkstandboden und Euter.

Dabei ist der Einsatz von Seilzügen zum Führen der Melkschläuche nicht unbedingt erforderlich, weil die Melkschläuche nicht seitlich von dem Nutztier wegverlegt werden müssen, sondern nur noch in den Melkstandboden hinein. Dadurch wird die Anzahl der am Melkstand befindlichen Gegenstände reduziert, um die Melkpersonal bei der Arbeit herumarbeiten muss und die gewartet und aufgeräumt werden müssen. Dabei wird zudem ein Reinigen des Melkstandes erleichtert.

Die Führungs- und Steuerungselemente der Melkanlage können dabei z. B. aus einem Keller durch den Melkstandboden oder aus einer Melkgrube herausgeführt werden. Das Melkzeug ist dabei an die individuelle Höhe der Zitzen des Nutztieres einstellbar, so dass sowohl Milchkühe mit weit abgesenktem Euter als auch mit kurzem Euter ohne umständliche Handhabung melkbar sind.

Vom Melkzeug ist entweder nur die Ausführelemente zum Ausführen und Ableiten der abgemolkenen Milch im Melkstandboden versenkt, oder aber das Melkzeug ist vollständig mitsamt Melkzeugführung, Versorgungsschläuchen, Steuerung und evtl. Seilzügen im Melkstandboden versenkbar.

Besonders bevorzugt ist das Melkzeug so im Melkstandboden versenkbar, dass der Melkstandboden im Wesentlichen erhebungslos ist, wenn sich das Melkzeug in einer im Melkstandboden versenkten Position befindet.

Dadurch werden beim Ein- und Austreiben der Nutztiere auf den Melkstandboden bzw. davon weg einerseits zu melkende Nutztiere vor einem Sturz und andererseits das Melkzeug vor Beschädigungen geschützt und vollständig unterhalb des Melkbodens verstaut und aufgeräumt.

In einer bevorzugten Ausführungsform wird die Schutzwirkung der versenkten Position im Melkstandboden dadurch verstärkt, dass das Melkzeug in einer zumindest teilweise im Boden versenkten Position mit einer Deckplatte ab- und bedeckbar ist. Dabei ist die Deckplatte robust genug gebaut, um das Gewicht daraufsteigender Nutztiere ohne Beschädigungen zu tragen. Insbesondere ist es vorteilhaft, wenn die Oberkante der Deckplatte im Wesentlichen auf gleicher Höhe wie die Oberkante des Melkstandbodens angeordnet ist, damit durch die Deckplatte keine Stufe und kein Loch gebildet wird, das bzw. die ein darüber befindliches Nutztier zum Stolpern bzw. Stürzen bringen könnte.

Ein erfindungsgemäßes Melkzeug kann bei allen bekannten Melkstandarten eingesetzt werden wie z. B. bei Karussellanlagen, Fischgrätanlagen, Side-by-Side-Anlagen und Tandemanlagen.

Dabei ist die Deckplatte zum Ab- und Bedecken des Melkzeugs in einer vorteilhaften Ausführungsform um eine vertikale Schwenkachse schwenkbar. Die Schwenkachse verläuft dabei innerhalb einer Aussparung im Melkstandboden, in die das Melkzeug versenkt werden kann. Die vertikale Schwenkachse befindet sich dabei möglichst an einem Rand der Aussparung, damit eine Schwenkbewegung der Deckplatte um die Schwenkachse eine möglichst große Positionsveränderung der Deckplatte bewirkt. Eine Schwenkbewegung ist daher von Vorteil, da die Deckplatte sich dabei nur in einer horizontalen Richtung bewegt, wodurch ein über der Abdeckplatte befindliches Nutztier nicht unnötig erschreckt wird oder in Kontakt mit der Abdeckplatte kommt.

Bevorzugt ist ein Betätigungsmittel vorgesehen, durch dessen Betätigung die Deckplatte das Melkzeug entweder ab- oder bedeckt.

In einer Ausführungsform weist die Melkanlage eine im Melkstandboden angeordnete Spüleinrichtung auf, die dazu dient, das Melkzeug in einer zumindest teilweise im Melkstandboden versenkten Position zu spülen. Dadurch, dass das Spülen des Melkzeuges zumindest teilweise im Melkstandboden erfolgt, wird die Spüleinrichtung zusammen mit dem Melkzeug selber im Melkstandboden verstaut, was weiteren freien Platz oberhalb des Melkstandbodens bereitstellt. Dies dient nicht nur optisch dazu, eine möglichst saubere und aufgeräumte Melkanlage bereitzustellen, sondern erhöht auch die Geschwindigkeit und Effizienz der in der Melkanlage bzw. insbesondere in der Melkgrube der Melkanlage arbeitenden Melkpersonen, die um weniger Versorgungsleitungen bzw. Spüleinrichtungen der Melkanlage herumlaufen und -arbeiten müssen.

Besonders bevorzugt ist zumindest ein Spülelement der Spüleinrichtung so an der Deckplatte zum Ab- und Bedecken des Melkzeugs angeordnet, dass das Melkzeug im von der Deckplatte bedeckten Zustand von der Spüleinrichtung gespült werden kann. Somit erfolgt der komplette Spülvorgang "unterirdisch", wobei das Spülelement von der Unterseite der Deckplatte aus das versenkte Melkzeug abspritzen und spülen kann.

Dabei ergibt sich das Problem, wie das in der Deckplatte angeordnete Spülelement mit Spülmittel versorgt werden kann. Wird die Deckplatte wie oben beschrieben um eine vertikale Schwenkachse bewegt, um das Melkzeug zu bedecken bzw. abzudecken, ist eine Spülmittelleitung bevorzugt in der Schwenkachse angeordnet. Dadurch befindet sich die Spülmittelleitung auch bei der Bewegung der Deckplatte an einem gleichbleibenden Ort, auch wenn sie ggf. eine Rotation um sich selbst durchführt. Die mechanische Belastung der Spülmittelleitung wird dadurch minimiert.

Besonders bevorzugt weist das Melkzeug Melkbecher zum Melken jeweils einer Zitze des Nutztieres auf, wobei je ein Melkbecher einzeln an eine Zitze des Nutztier ansetzbar ist. Das Heranführen der Melkbecher kann dabei von Hand oder automatisch erfolgen. Durch die Melkbecher wird jede Zitze, bei Kühen jedes Viertel, einzeln ausgemolken. Bei Melkzeugen, wie Sie im Stand der Technik benutzt werden, werden alle Viertel gleichzeitig gemolken, ein Mittelwert aus der von allen bzw. je zwei Vierteln ausgemolkenen Milch gebildet und von einem Steuermittel zur Entscheidung darüber ausgewertet, ob das Melkzeug abgesetzt werden soll oder weitergemolken werden soll. Da die einzelnen Viertel einer Milchkuh unterschiedlich viel Milch geben, werden einige Viertel dabei zu sehr, andere nicht voll ausgemolken. Durch das erfindungsgemäße einzelne Ansteuern der Zitzen ist das Melken sehr tierschonend, da durch das Vermeiden von Blindmelken (Melken bereits ausgemolkener Zitzen) eine unnötige Vakuumsbelastung an der Zitze reduziert wird. Eine Gefahr beim Blindmelken ist, dass die Zellzahl der Milch eines Nutztieres reduziert wird. Weiterhin wird bei der erfindungsgemäßen Melkanlage jede einzelne Zitze voll ausgemolken, was eine Erhöhung der abgemolkenen Milchmenge und somit der Effektivität der Melkanlage darstellt.

In einer Ausführungsform weist das Melkzeug eine Melkbecherhalterung auf, worin die einzelnen Melkbecher in einem Lagerzustand gelagert werden. Dabei ist die Meikbecherhalterung zumindest teilweise im Melkstandboden versenkbar. Somit wird nicht jeder Melkbecher einzeln für sich mit einem einzelnen Hebemechanismus vertikal gehoben oder abgesenkt, sondern ein einziger Hebemechanismus sorgt für die vertikale Bewegung der Melkbecherhalterung und der darin gelagerten Melkbecher.

Bevorzugt weisen dabei die Melkbecher einen Griffabschnitt auf, der im Lagerzustand aus der Melkbecherhalterung herausragt. Der Griffabschnitt dient zum Greifen des Melkbechers, wenn beispielsweise der Melker den Melkbecher aus der Halterung nimmt und per Hand an die Zitze des Nutztieres ansetzt. Der Griffabschnitt weist dabei in einer Ausführungsform eine größere Ausdehnung als der Rest des Melkbechers auf, damit er nicht in ein Loch der Melkbecherhalterung rutscht, in dem die Melkbecher angeordnet sind. Der Griffabschnitt besteht beispielsweise aus Gummi und ist zumindest 2cm breit, um zumindest mit Daumen und Zeigefinger einer Hand ergriffen werden zu können.

Vorteilhaft erfolgt eine Abnahme der Melkbecher von den Zitzen des Nutztieres automatisch einzeln und in Reihenfolge der ausgemelkten Zitzen des Nutztieres. Dadurch wird wie oben erwähnt ein Blindmelken einer Zitze vermieden.

Das Ansetzen der Melkbecher kann dabei entweder von Hand oder auch automatisch erfolgen, bevorzugt ist allerdings ein Ansetzen der Melkbecher mit der Hand. Um die Melkbecher zum richtigen Zeitpunkt abzunehmen, weist die Melkanlage bevorzugt einen Melkgeschwindigkeitsmesser zur Messung der Melkgeschwindigkeit jedes einzelnen Melkbechers auf. Der Melkgeschwindigkeitsmesser misst dabei entweder, wie viel Zeit benötigt wird, um eine vorgegebene Menge Milch abzusaugen, oder aber wie viel Milch in einer gewissen Zeit, beispielsweise in 20 Sekunden, abgemolken wird. Dadurch wird für jede Zitze einzeln überwacht, wie viel Milch sie gerade abgibt. Da die Zitzen unterschiedlich viel Milch in einer unterschiedlichen Geschwindigkeit abgeben können, ist das Messen der Melkgeschwindigkeit pro Melkbecher bzw. Zitze erstens günstig, um den Melkvorgang für jede Zitze individuell und rechtzeitig stoppen zu können, als auch um jede Zitze voll auszumelken. Dies kann dadurch geschehen, dass die Abnahme jedes Melkbechers von einer Zitze in Abhängigkeit vom zugehörigen Melkgeschwindigkeitsmesser dann erfolgt, wenn die Melkgeschwindigkeit des Melkbechers an der Zitze unter einen vorgebbaren Wert fällt.

Der Melkvorgang wird nicht erst dann gestoppt, wenn die Zitze überhaupt keine Milch mehr gibt, sondern bereits wenn die Milchabgabe, also die Melkgeschwindigkeit, stark reduziert ist.

Alternativ kann das Melkzeug zumindest teilweise entweder in einem unter dem Melkstandboden angeordneten Melkkeller versenkbar sein, oder aber unter einem Kragen versenkbar. Ein solcher Kragen verlängert den Melkstandboden in eine gegenüber dem Melkstandboden abgesenkte Melkgrube. In der Melkgrube befindet sich normalerweise das Melkpersonal, um die Melkbecher an die einzelnen Zitzen anzusetzen. Bei der zweiten Alternative ragt der Kragen so weit in die Melkgrube hinein, dass das Nutztier zumindest bis zu seinen Zitzen auf dem Kragen Platz finden kann.

Eine Ausführungsform der Erfindung ist beispielhaft in den Figuren dargestellt. Es zeigen:
- Fig. 1 -: einen schematischen Schnitt durch eine Melkanlage mit einem Melkstandboden mit Melkkeller, bei dem das Melkzeug vollständig im Boden versenkbar ist;
- Fig. 2 -: eine schematische Darstellung einer Melkanlage mit einer um eine senkrechte Achse schwenkbaren Deckklappe sowie Versorgungsleitungen und einer Spüleinrichtung;
- Fig. 3a -: eine Melkanlage mit geöffneter Deckplatte und angehobener Melkbecherhalterung in einer schematischen Schnittdarstellung;
- Fig. 3b -: die Melkanlage der Figur 3a in einem an der Deckplatte bedeckten Zustand und
- Fig. 4 -: eine schematische Darstellung einer im Boden versenkbaren Melkanlage.

In den Figuren werden für identische bzw. vergleichbare Komponenten dieselben Bezugszeichen verwendet.

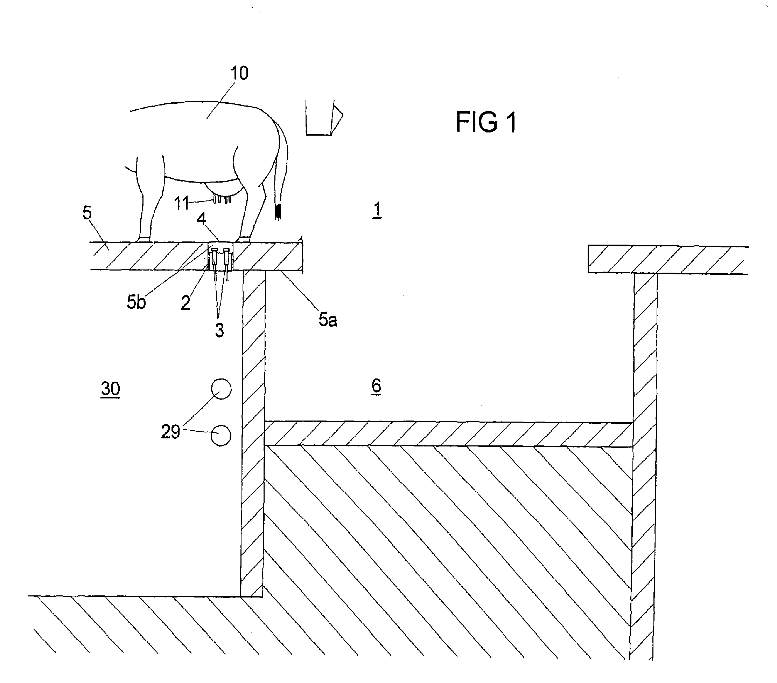

Fig. 1 zeigt in einer schematischen Schnittdarstellung eine Melkanlage 1 und eine darin befindliche Kuh 10 als Nutztier. Die Kuh 10 wird zum Melken auf den Melkstandboden 5 getrieben und dort so platziert, dass sich ihr Euter vertikal über einem Melkzeug 2 befindet. Der Melkstandboden 5 endet in einem Kragen 5a, der auf Höhe des Melkstandbodens 5 in eine Melkgrube 6 hineinragt, die gegenüber dem Melkstandoden 5 vertikal abgesenkt ist. Die Melkgrube 6 weist zwei Längsseiten auf, entlang derer zum Melken Kühe so aufgereiht werden, dass sie mit ihrer Rückseite zur Melkgrube weisen, wie beispielsweise die Kuh 10.

Von der Melkgrube 6 aus kann nicht dargestelltes Melkpersonal sowohl Zitzen 11 des Euters der Kuh 10 erreichen, als auch das im Melkstandboden 5 versenkte Melkzeug 2. Beispielsweise kann das Melkpersonal vom Melkstandboden 6 aus vor dem Ansetzen des Melkzeugs 2 die Zitzen 11 abwischen und zur Prüfung der Milchqualität mit der Hand kurz vormelken.

Beim Ein- und Austreiben der Kuh 10 in die in Figur 1 dargestellte Position deckt eine scheibenförmige Deckplatte 4 das Melkzeug 2 auf Höhe des Melkstandbodens 5 ab, um es vor Beschädigungen zu schützen.

Das Melkzeug 2 ist in einer vertikalen ausgerichteten, zylinderförmigen Aussparung 5b des Melkstandbodens 5 abgesenkt. Der Durchmesser der Deckplatte 4 ist größer als der Durchmesser der Aussparung 5b, weswegen die Deckplatte 4 in dem Zustand, in dem sie das Melkzeug 2 bedeckt, mit ihren Rändern auf dem Melkstandboden 5 abgestützt ist. Dies versetzt die Deckplatte 4 in eine besonders stabile Position, bei der sie dem Gewicht darüber getriebener Nutztiere standhalten kann. An der Außenkante der Aussparung 5b kann der Melkstandboden auch für den Rand der Deckplatte 4 ein wenig abgesenkt sein, um somit den Niveauunterschied zwischen dem Melkstandboden 5 und der Deckplatte 4 im das Melkzeug 2 bedeckenden Zustand zu minimieren und ein Stolpern darüber getriebener Nutztiere zu verhindern.

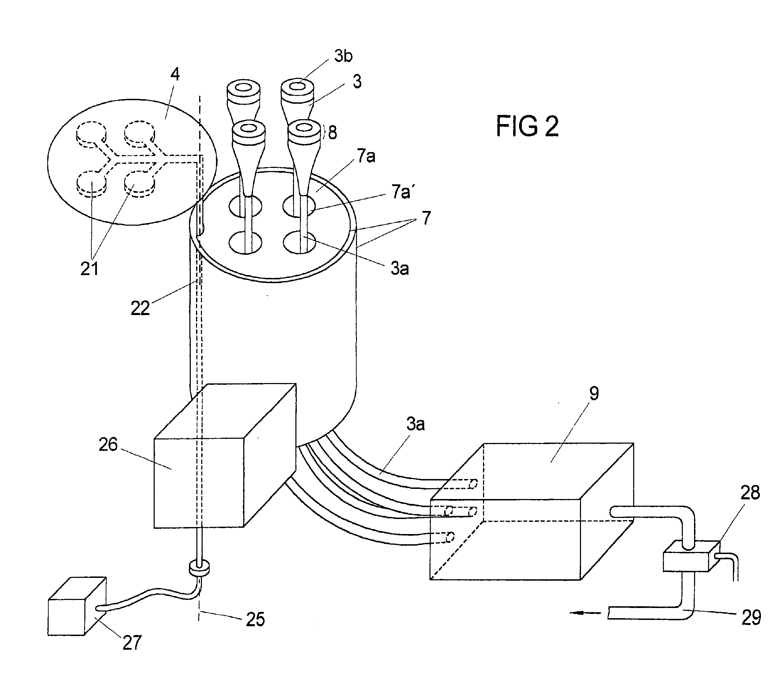

Ein Ausschnitt der Melkanlage aus Figur 1 ist in Figur 2 vergrößert dargestellt, um einzelne Funktionen aufzuzeigen. Das Melkzeug umfasst zunächst eine zylinderförmige Melkbecherhalterung 7, deren Zylinderachse vertikal ausgerichtet ist und deren Zylinderdurchmesser auf den Durchmesser der Aussparung 5b im Melkstandboden 5 abgestimmt ist, die in dem in Figur 1 dargestellten Melkstandboden 5 zur Aufnahme des Melkzeugs 2 ausgebildet ist. Das obere Zylinderende der Melkbecherhalterung 7 ist von einer Melkbecherhalterungsplatte 7a bedeckt. In der Melkbecherhalterungsplatte 7a sind vier Löcher 7a' ausgebildet, die als Eckpunkte eines Quadrates angeordnet sind.

Die Melkbecherhalterung 7 kann von einem mechanischen Hebemechanismus 26 so betätigt werden, dass sie sich vertikal nach oben oder unten entlang der in dem Melkstandboden ausgebildeten Aussparung zur Aufnahme des Melkzeugs bewegt.

Jedes der Löcher 7a' dient zur Aufnahme und Lagerung eines von vier Melkbechern 3. Jeder der vier Melkbecher 3 dient zum Ansetzen an jeweils eine Zitze sowie zum Melken der Zitze. Bei einer Kuh werden die Zitzen auch "Viertel" genannt. Jeder der Melkbecher 3 ist mit einem Melkbecherschlauch 3a verbunden, durch den die abgemolkene Milch abgeleitet wird. Zudem wird über den Melkbecherschlauch 3a ein Saugvakuum im Melkbecher 3 erzeugt, um damit Milch aus der Zitze zu melken.

Die Melkbecher 3 sind im Wesentlichen kegelförmig, wobei das schmalere Ende mit einem Ende eines Melkschlauches 3a verbunden ist und unten angeordnet ist. Das breitere, obere Ende des Melkbechers 3 weist zum einen eine Öffnung 3b zum Einführen einer Zitze in den Melkbecher 3 auf, zum anderen befindet sich am oberen Ende des Melkbechers 3 ein Griffabschnitt 8. Der Durchmesser des Griffabschnitts 8 ist gegenüber dem Durchmesser des Melkbechers 3 vergrößert, um zu verhindern, dass der Melkbecher 3 vollständig in das Loch 7a' der Melkbecherhalterungsplatte 7a rutscht. Wird ein Melkbecher 3 mit dem Melkbecherschlauch 3a voran in eines der vier Löcher 7a' eingeführt, kann der Melkbecher 3 mit Hilfe des Griffabschnitts 8 bequem in dem Loch 7a' gelagert werden. Der Griffabschnitt 8 steht dabei so weit über die Melkbecherhalterungsplatte 7a hinaus, dass der Melkbecher 3 vom nicht dargestellten Melkpersonal bequem umgriffen, angehoben und an eine Zitze des Nutztieres angesetzt werden kann. Dazu ist der Griffabschnitt 8 entlang des Kegelmantels des Melkbechers 3 so weit ausgedehnt, dass er mindestens von Daumen und Zeigefinger einer Hand ergriffen werden kann.

Ist ein Melkbecher bis auf den Griffabschnitt 8 im Loch 7a' versenkt, so befindet er sich in einer Lagerungsposition. Wird die Melkbecherhalterung 7 durch den Hebemechanismus 26 an- oder abgehoben, so werden mit ihm automatisch auch die in Lagerposition befindlichen Melkbecher 3 in vertikaler Richtung angehoben bzw. abgesenkt. Die Melkbecherschläuche 3a sind mit ihrem anderen Ende mit dem Melkgeschwindigkeitsmesser 9 verbunden, der in Figur 2 schematisch durch einen quaderförmigen Kasten dargestellt ist. Innerhalb des Melkgeschwindigkeitsmessers 9 befindet sich für jeden Melkbecher 3 jeweils ein Melkgeschwindigkeitsmesser. Die Melkgeschwindigkeit wird anhand der Durchflussmenge bestimmt, die für jeden einzelnen Melkbecher 3, also für jedes einzelne Viertel der Kuh gemessen und mit einem vorgebbaren Wert verglichen wird. Fällt die Melkgeschwindigkeit unter den vorgegeben Wert, weil die Durchflussmenge zu gering wird, wird innerhalb des Melkgeschwindigkeitsmessers 9 der Melkschlauch 3a durch eine Vakuumabsperreinheit vom Vakuum abgeklemmt. Dies bewirkt ein Ausbleiben des Saugvakuums im Melkbecher 3, der daraufhin aufhört zu melken und durch seine Schwerkraft von der Zitze abfällt und automatisch in das Loch 7a' der Melkbecherhalterung 7 rutscht. Dadurch wird der Melkprozess einer einzelnen Zitze gestoppt. Erst wenn sich so alle vier Melkbecher 3 von den vier Vierteln der Kuh gelöst haben, ist das Euter der Kuh vollständig ausgemolken. Ein individuelles überprüfen der Melkgeschwindigkeit jeder einzelnen Zitze bewirkt dabei, dass keine Zitze zu stark und keine Zitze zu schwach ausgemolken wird. Dadurch wird einerseits ein Blindmelken und dadurch eine Verminderung der Zellanzahl in der Milch einer Zitze verhindert, zum anderen durch das vollständige Ausmelken die abgemolkene Milchmenge erhöht.

Auf der den Melkschläuchen 3a gegenüberliegenden Seite des Melkgeschwindigkeitsmessers 9 wird die abgemolkene Milch aller vier Zitzen durch einen Schlauch weiter zu einem Milchmengenmessgerät und zur Weiterverarbeitung abgeleitet. An diesem Schlauch kann optional eine zweite Ventileinheit 28 angeordnet sein, die die Milch desinfiziert.

Das Melkzeug umfasst weiterhin die im Wesentlichen scheibenförmige Deckplatte 4, die in Figur 1 oberhalb des Melkzeugs 2 angeordnet ist und es somit bedeckt, in Figur 2 seitlich verschwenkt ist, wodurch das Melkzeug abgedeckt und somit geöffnet ist. Zum Öffnen und Schließen, also zum Be- und Abdecken des Melkzeugs ist die Abdeckplatte um die Schwenkachse 25 schwenkbar. Die Schwenkachse 25 verläuft parallel zur Zylinderachse der Melkbecherhalterung 7 sowie parallel zur vertikalen Hebe- und Senkrichtung der Melkbecherhalterung 7. Die Schwenkachse 25 ist nahe des Zylindermantels der Melkbecherhalterung 7 angeordnet, um durch ein Verschwenken um die Schwenkachse 25 eine Lageveränderung der Deckplatte 4 in Relation zum Melkzeug zu maximieren.

Das Heben und Senken des Melkzeuges 2 bzw. der Melkbecherhalterung 7 sowie die Schwenkbewegung zum Ab- bzw. Bedecken des Melkzeugs 2 durch die Deckplatte 4 kann vom Melkpersonal durch ein nicht dargestelltes Betätigungsmittel ausgelöst werden, dass vorzugsweise so angeordnet ist, dass es von der Melkgrube 6 aus bedient werden kann. Durch das Betätigungsmittel wird der Hebemechanismus 26 betätigt.

Entlang der Schwenkachse 25 verläuft die Spülmittelleitung 22, durch die auf der Unterseite der Deckplatte 4 befindliche Spülelement 21 mit Spülmittel versorgt werden. Die Spülmittelleitung 22 ist dazu an ihrem unteren Ende mit einer ersten Ventileinheit 27 verbunden, die zur Zwischendesinfektion und Spülung dient.

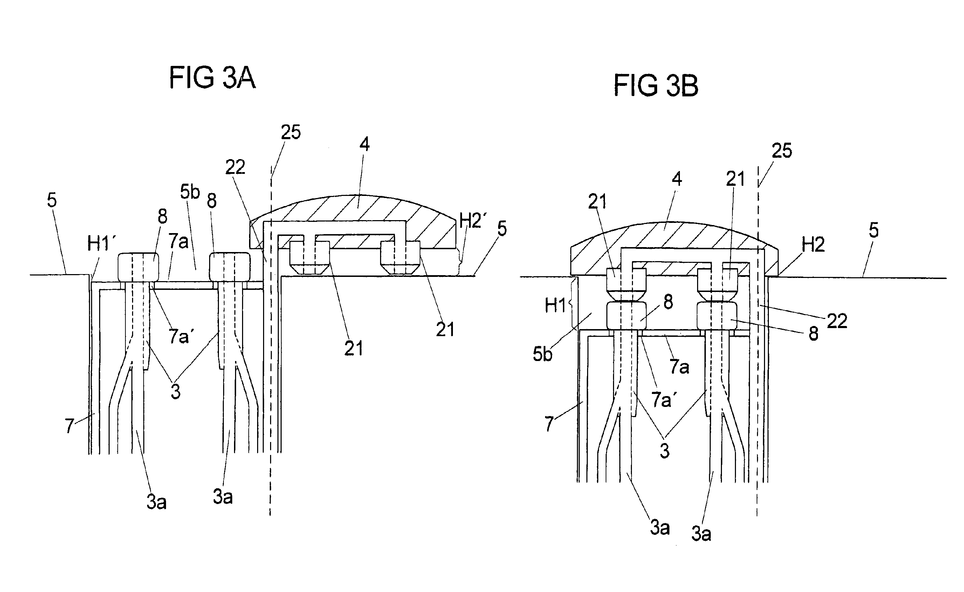

Die Spülelemente 21 an der Unterseite der Deckplatte 4 befinden sich an den Ecken eines gedachten Quadrates in der Ebene der Deckplatte 4 und korrelieren in dem Zustand, indem sie das Melkzeug bedecken, mit der Position der vier Melkbecher 3. Durch die Anordnung der Spülmittelleitung 22 entlang der Schwenkachse 25 wird die mechanische Belastung der Spülmittelleitung 22 minimiert, da sie nie die Position entlang der Schwenkachse 25 verlässt, sondern lediglich eine Rotation um die eigene Längsachse durchführt. Die Positionierung der Deckplatte 4 mitsamt Spülelementen 21 in der Relation zu den Melkbechern 3 sowie der Melkbecherhalterung 7 wird anhand der Figuren 3a und 3b näher erläutert.

Figur 3a zeigt einen Schnitt durch den Melkstandboden 5 (vgl. Figur 1) in Höhe einer zylinderförmigen, vertikal ausgerichteten Aussparung 5b im Melkstandboden 5. Innerhalb der Aussparung 5b ist die Melkbecherhalterung 7 in vertikaler Richtung beweglich gelagert angeordnet. Das obere Ende der Melkbecherhalterung 7, die Melkbecherhalterungsplatte 7a, befindet sich um die Höhe H1' versetzt knapp unterhalb der Höhe des Melkstandbodens 5.

Die Deckplatte 4 ist um die Schwenkachse 25 seitlich in horizontaler Richtung so verschwenkbar, dass sie mit ihrer Scheibenform beinahe ausschließlich ein Stück des Melkstandbodens 5 bedeckt. Die Griffabschnitte 8 der oberen Enden der Melkbecher 3 ragen aus der Melkbecherhalterungsplatte 7a vertikal nach oben heraus, wobei deren oberes Ende auch oberhalb des Niveaus des Melkstandbodens 5 angeordnet ist.

In Figur 3a ist gezeigt, dass die im Wesentlichen scheibenförmige Deckplatte 4 leicht nach oben vom Melkstandboden 5 weggewölbt ist, um den innerhalb befindlichen Spülleitungen Platz zu lassen. Die Spülelemente 21 befinden sich auf der der Melkbecherhalterung 7 bzw. dem Melkstandboden 5 zugewandten Unterseite der Deckplatte 4, die aufgrund der Ausdehnung des Spülelementes 21 nicht vollständig auf dem Melkstandboden 5 aufliegt, sondern um die Höhe H2' angehoben ist. Befindet sich die Melkanlage in dem in Figur 3a gezeigten Zustand, ist sie zum Melken einsatzbereit, die Melkbecher 3 können vom Melkpersonal in der Melkgrube 6 ergriffen und an die Zitzen 11 der Kuh 10 angesetzt werden (vgl. Figur 1).

Soll ein Nutztier jedoch in den Melkstand hinein- oder hinausgetrieben werden, bzw. wird der Melkstand gerade nicht benutzt, befindet sich der Melkstand in der in Figur 3b gezeigten Stauposition. Die Melkbecherhalterung 7 ist um die Höhe H1 versetzt unterhalb des Melkstandbodens 5 abgesenkt, wobei die Höhe H1 dem Betrage nach größer ist als die Höhe H1', der gleichen Distanz in der Arbeitsposition der Figur 3a. Die Deckplatte 4 ist im Gegensatz zur Arbeitsposition der Figur 3a um die Schwenkachse 25 so verschwenkt, dass sie erstens die Aussparung 5b im Melkstandboden 5 vollständig bedeckt, und zweitens jedes der vier Spülelemente 21 oberhalb eines Melkbechers 3 angeordnet ist. Gegenüber der Arbeitsposition der Figur 3a ist die Deckplatte 4 in Figur 3b vollständig auf das Niveau des Melkstandbodens 5 abgesenkt, wobei gilt H2≈0.

In dieser Stauposition werden nach einem Melkprozess alle Melkbecher 3 für die Spülelemente 21 durchgespült, gereinigt und desinfiziert. Die Deckplatte 4 ist an ihrer Oberseite, also auf der dem Melkzeug 2 gegenüberliegenden Seite, leicht nach außen gewölbt, während die dem Melkzeug 2 bzw. Melkstandboden 5 zugewandte Seite im Wesentlichen eben ist.

In Figur 1 ist das Melkzeug 2 durch die Aussparung 5b in den Melkkeller 30 absenkbar. Dort befinden sich auch Ableitungen 29, die die abgemolkene Milch in einer Richtung ableiten, die senkrecht zur Schnittebene der Figur 1 und somit entlang der Melkgrube 6 ausgerichtet ist. Alternativ zu dieser Anordnung kann auch bei einem etwas verlängerten Kragen 5a das Melkzeug 2 nicht in einen Melkkeller, sondern in die unterhalb des Kragens 5a befindliche Melkgrube 6 abgesenkt werden. In diesem Fall ist auch die Kuh 10 in ihrer Melkposition zumindest teilweise in einer auf dem Kragen 5a stehenden Position.

Zur Ansteuerung der Melkbecher 3 dient ein nicht dargestelltes Steuerungsmittel, das sich in einem Raumbereich unterhalb des Melkstandbodens 5 im Melkkeller 30 oder alternativ in der Melkgrube 6 befindet.

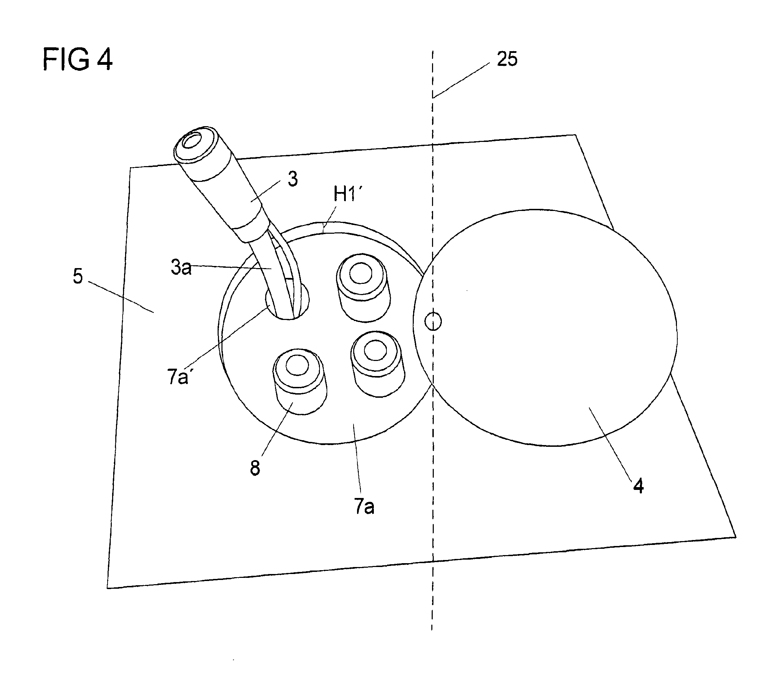

In Figur 4 ist eine perspektivische Draufsicht auf ein im Melkstandboden 5 versenkbares Melkzeug dargestellt. Drei der Melkbecher 3 sind in der Lagerungsposition auf der Melkbecherhalterungsplatte 7a, ein Melkbecher 3 ist zum Ansetzen an eine Zitze etwas angehoben, wodurch die Melkschläuche 3a am unteren Ende des Melkbechers 3 sowie das Loch 7a' sichtbar sind. Die Melkbecherhalterungsplatte 7a ist verglichen mit der Höhe des Melkstandbodens 5 um die Höhe H1' abgesenkt. Die Deckplatte 4 ist um die Schwenkachse 25 so verschwenkt, dass sie ein im Wesentlichen kreisförmiges Stück des Melkstandbodens 5 bedeckt. Nur ein kleines Stück der Deckplatte 4 nahe der Schwenkachse 25 bedeckt einen Teil der Melkbecherhalterungsplatte 7a.

### Bezugszeichenliste

- 1: Melkanlage
- 2: Melkzeug
- 3: Melkbecher
- 3a: Melkbecherschlauch
- 3b: Öffnung
- 4: Deckplatte
- 5: Melkstandboden
- 5a: Kragen
- 5b: Aussparung
- 6: Melkgrube
- 7: Melkbecherhalterung
- 7a: Melkbecherhalterungsplatte
- 7a': Loch
- 8: Griffabschnitt
- 9: Melkgeschwindigkeitsmesser
- 10: Nutztier
- 11: Zitze/Viertel
- 20: Spüleinrichtung
- 21: Spülelement
- 22: Spülmittelleitung
- 25: Schwenkachse
- 26: Hebemechanismus
- 27: Erste Ventileinheit
- 28: Zweite Ventileinheit
- 29: Ableitung
- 30: Melkkeller

## Patentansprüche

1. Melkanlage zum Melken eines Nutztieres, mit einem Melkzeug zum Ansetzen an und Melken mindestens einer Zitze des Nutztieres auf einem Melkstandboden der Melkanlage,
**dadurch gekennzeichnet,**
**dass** das Melkzeug (2) zumindest teilweise im Melkstandboden (5) versenkbar ist und durch zumindest teilweises Herausführen aus dem Melkstandboden (5) von unten an mindestens eine Zitze (11) des zu melkendes Nutztieres (10) ansetzbar ist.

2. Melkanlage nach Anspruch 1, **dadurch gekennzeichnet, dass** das Melkzeug (2) so im Melkstandboden (5) versenkbar ist, dass der Melkstandboden (5) im Wesentlichen erhebungslos ist, wenn sich das Melkzeug (2) in einer im Melkstandboden (5) versenkten Stauposition befindet.

3. Melkanlage nach Anspruch 1 oder 2, **dadurch gekennzeichnet, dass** das Melkzeug (2) in einer Stauposition einschließlich aller ableitenden Milchschläuche (3a, 29) in einer Aussparung (5b) des Melkstandbodens (5) versenkbar ist.

4. Melkanlage nach einem der vorangegangenen Ansprüche, **gekennzeichnet durch** eine gegenüber dem Melkstandboden (5) vertikal abgesenkte Melkgrube (6), von der aus das versenkbare Melkzeug (2) **durch** in der Melkgrube (6) befindliches Melkpersonal bedienbar ist.

5. Melkanlage nach einem der vorangegangenen Ansprüche, **gekennzeichnet durch** eine Deckplatte (4) zum Ab- und Bedecken des Melkzeugs (2) in einer zumindest teilweise im Melkstandboden (5) versenkten Stauposition.

6. Melkanlage nach Anspruch 5, **dadurch gekennzeichnet, dass** die Deckplatte (4) zum Ab- und Bedecken des Melkzeugs (2) um eine vertikale Schwenkachse (25) schwenkbar ist.

7. Melkanlage nach Anspruch 5 oder 6, **gekennzeichnet durch** ein Betätigungsmittel zum Ab- und Bedecken des Melkzeugs (2) **durch** die Deckplatte (4).

8. Melkanlage nach einem der vorangegangenen Ansprüche, **gekennzeichnet durch** eine im Melkstandboden (5) angeordnete Spüleinrichtung (20) zum Spülen des Melkzeugs (2) in einer zumindest teilweise im Melkstandboden (5) versenkten Stauposition.

9. Melkanlage nach Anspruch 5 und 8, **dadurch gekennzeichnet, dass** zumindest ein Spülelement (21) der Spüleinrichtung (20) so an der Deckplatte (4) angeordnet ist, dass das Melkzeug (2) im von der Deckplatte (4) bedeckten Zustand von der Spüleinrichtung (20) spülbar ist.

10. Melkanlage nach Anspruch 6 und 9, **dadurch gekennzeichnet, dass** das an der Deckplatte (4) angeordnete Spülelement (21) durch eine in der Schwenkachse (25) der Deckplatte (4) angeordnete Spülmittelleitung (22) mit Spülmittel versorgt wird.

11. Melkanlage nach einem der vorangegangenen Ansprüche, **dadurch gekennzeichnet, dass** das Melkzeug (2) Melkbecher (3) zum Melken jeweils einer einzelnen Zitze (11) des Nutztieres (10) aufweist, wobei je ein Melkbecher (3) einzeln an eine Zitze (11) ansetzbar ist.

12. Melkanlage nach Anspruch 11, **dadurch gekennzeichnet, dass** die Melkbecher (3) in einem Lagerzustand in einer Melkbecherhalterung (7) gelagert sind, die zumindest teilweise im Melkstandboden (5) versenkbar ist.

13. Melkanlage nach Anspruch 12, **dadurch gekennzeichnet, dass** die Melkbecherhalterung (7) vertikal anhebbar und absenkbar ist.

14. Melkanlage nach Anspruch 12 oder 13, **dadurch gekennzeichnet, dass** die Melkbecher (3) einen Griffabschnitt (8) aufweisen, der im Lagerzustand aus der Melkbecherhalterung (7) herausragt.

15. Melkanlage nach einem der Ansprüche 11 bis 14, **dadurch gekennzeichnet, dass** die Melkbecher (3) zur Vermeidung eines Blindmelkens einer Zitze (11) des Nutztieres (10) einzeln ansteuerbar sind.

16. Melkanlage nach einem der Ansprüche 11 bis 15, **dadurch gekennzeichnet, dass** eine Abnahme der Melkbecher (3) von den Zitzen (11) des Nutztieres (10) automatisch einzeln und in Reihenfolge der ausgemelkten Zitzen (11) des Nutztieres (10) erfolgt.

17. Melkanlage nach einem der Ansprüche 11 bis 16, **gekennzeichnet durch** je einen Melkgeschwindigkeitsmesser (9) zur Messung der Melkgeschwindigkeit jedes einzelnen Melkbechers (3).

18. Melkanlage nach Ansprüche 16 und 17, **dadurch gekennzeichnet, dass** die Abnahme eines der Melkbecher (3) von einer der Zitzen (11) in Abhängigkeit vom zugehörigen Melkgeschwindigkeitsmesser (9) dann erfolgt, wenn die Melkgeschwindigkeit des Melkbechers (3) unter einen vorgebbaren Wert fällt.

19. Melkanlage nach einem der vorangegangenen Ansprüche, **dadurch gekennzeichnet, dass** das Melkzeug (2) zumindest teilweise in einen unter dem Melkstandboden (5) angeordneten Melkkeller (30) versenkbar ist.

20. Melkanlage nach einem der vorangegangenen Ansprüche, **dadurch gekennzeichnet, dass** das Melkzeug (2) zumindest teilweise unter einen den Melkstandboden (5) verlängernden Kragen (5a) versenkbar ist, wobei der Kragen (5a) in eine gegenüber dem Melkstandboden (5) abgesenkte Melkgrube (6) hinausragt.
